# EUROPEAN PATENT APPLICATION

(11) **EP 1 568 458 A1**
(43) Date of publication of application: **31.08.2005**
(21) Application number: 03772811.0
(22) Date of filing: 17.11.2003
(51) Int. Cl.: B29C 33/30

(54) **MOLDING DIE, MOLDING METHOD, DISK SUBSTRATE, AND MOLDING MACHINE**

(30) Priority: 18.11.2002 JP 2002333899
(71) Applicant: SUMITOMO HEAVY INDUSTRIES, LTD., Tokyo 141-8686 (JP); SEIKOH GIKEN Co., Ltd., Chiba 2702214 (JP)
(72) Inventor: INADA, Yuichi, Chiba-shi, Chiba 264-0034 (JP); SAKAMOTO, Yasuyoshi, Kamagaya-shi, Chiba 273-0123 (JP)
(74) Representative: Wagner & Geyer
(86) International application number: PCT/JP2003/014572
(87) International publication number: WO 2004/045822

(57) **Abstract**

An object of the present invention is to provide a mold for molding, a molding method, and a molding machine in which generation of burrs on a disc substrate can be prevented to thereby enhance quality of the disc substrate, as well as a disc substrate molded by the same. The mold for molding includes a mirror-surface disc (16); a stamper (29) having a hole formed at its center, and attached to the front end surface of the mirror-surface disc (16); and an inner holder (60) for holding the stamper (29) by means of press fit into the hole. In the course of the press fit, at least either the stamper (29) or the inner holder (60) is subjected to stress in excess of its yield point and plastically deformed. In this case, the inner holder (60) is press-fitted into the hole of the stamper (29) to thereby hold the stamper (29), thereby eliminating need to form a holding portion at the outer circumferential edge of the front end of the inner holder (60). Accordingly, an associated groove is not formed on the disc substrate. Thus, a print region on the disc substrate can be increased.

## Description

### TECHNICAL FIELD

The present invention relates to a mold for molding, a molding method, a disc substrate, and a molding machine.

### BACKGROUND ART

Conventionally, for example, in an injection molding machine for molding disc substrates, resin melted within a heating cylinder is charged into a cavity formed in a disc-molding mold, which serves as a mold for molding (mold apparatus).

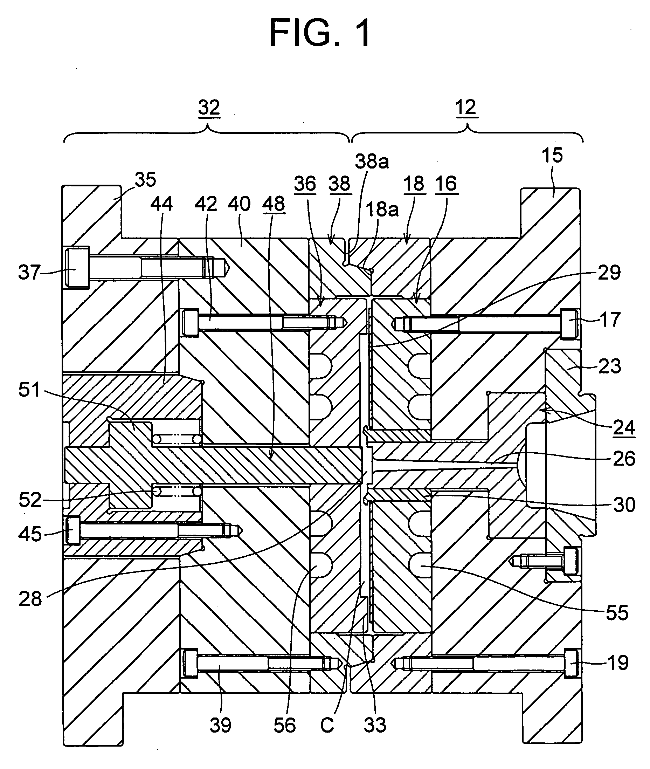

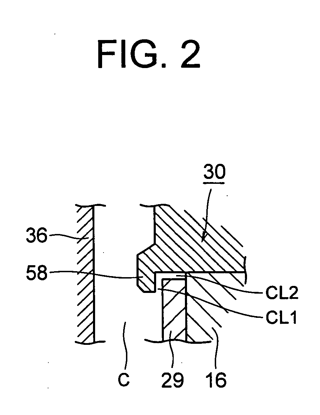

FIG. 1 is a sectional view of a conventional disc-molding mold, and FIG. 2 is a sectional view showing essential portions of the conventional disc-molding mold.

In FIGS. 1 and 2, reference numeral 12 denotes a stationary-side mold assembly attached to an unillustrated stationary platen by use of unillustrated bolts, and reference numeral 32 denotes a movable-side mold assembly attached to an unillustrated movable platen by use of unillustrated bolts. The mold assemblies 12 and 32 constitute a disc-molding mold. An unillustrated mold clamping mechanism is disposed behind the movable platen. Operation of the mold clamping mechanism causes the movable platen to advance and retreat, whereby the mold assembly 32 advances and retreats (moves rightward and leftward in FIG. 1) to contact and move away from the mold assembly 12. In this manner, the disc-molding mold undergoes mold closing, mold clamping, and mold opening. When mold closing is performed, a cavity C is formed between the mold assembly 12 and the mold assembly 32.

The mold assembly 12 includes a base plate 15; a mirror-surface disc 16 attached to the base plate 15 by use of bolts 17; an annular guide ring 18 disposed radially outward of the mirror-surface disc 16 and attached to the base plate 15 by use of bolts 19; a locating ring 23 disposed in the base plate 15 in such a manner as to face the stationary platen and adapted to position the base plate 15 with respect to the stationary platen; and a sprue bush 24 disposed adjacent to the locating ring 23 and extending frontward (leftward in FIG. 1) through the base plate 15 and the mirror-surface disc 16.

A sprue 26 is formed along the axis of the sprue bush 24 in order to allow passage of resin injected from the injection nozzle of an unillustrated injection unit. The front end (the left end in FIG. 1) of the sprue bush 24 faces the cavity C, and a die 28 having a recess is formed at the front end of the sprue bush 24.

Meanwhile, when resin is fed into the cavity C and allowed to set therein, a prototype substrate, which is a prototype for a disc substrate, is formed. At this time, fine pits are formed on one side of the disc substrate, thereby forming an information side. In order to form the fine pits, a stamper 29 is attached to the front end surface (left end surface in FIG. 1) of the mirror-surface disc 16. The stamper 29 has fine pits formed on its front end surface and is pressed against the mirror-surface disc 16 by means of an unillustrated outer holder acting on its outer circumferential edge and an inner holder 30 acting on its inner circumferential edge. An unillustrated stationary-side air blow bush and the like are also disposed on the mold assembly 12.

The mold assembly 32 includes a base plate 35; an intermediate plate 40 attached to the base plate 35 by use of bolts 37; a mirror-surface disc 36 attached to the intermediate plate 40 by use of bolts 42; an annular guide ring 38 disposed radially outward of the mirror-surface disc 36 and attached to the intermediate plate 40 by use of bolts 39; a guide member 44 disposed in the base plate 35 in such a manner as to face the movable platen and attached to the intermediate plate 40 by use of bolts 45; and a cut punch 48 disposed in opposition to the sprue bush 24 and in such a manner as to be able to advance and retreat. The front end (right end in FIG. 1) of the cut punch 48 has a shape corresponding to the die 28.

An annular cavity ring 33 is disposed on the front end surface (right end surface in FIG. 1) of the mirror-surface disc 36 along the outer circumferential edge of the mirror-surface disc 36 in such a manner as to project toward the mirror-surface disc 16 by a dimension corresponding to the thickness of a disc substrate to be molded. In FIG. 1, the cavity ring 33 is depicted as being integral with the mirror-surface disc 36. However, in actuality, the cavity ring 33 is a separate element and fixed to the mirror-surface disc 36 by use of unillustrated bolts.

The cavity ring 33 defines a depression located radially inward thereof. When mold closing and mold clamping are performed, the depression serves as the cavity C.

A flange 51 formed integrally with the cut punch 48 is disposed within the guide member 44 such that it can advance and retract. An unillustrated drive cylinder is disposed rearward (leftward in FIG. 1) of the flange 51 and, when operated, causes the flange 51 to move frontward (rightward in FIG. 1). A cut-punch return spring 52 is disposed between the flange 51 and the intermediate plate 40 located frontward of the flange 51. The cut-punch return spring 52 urges the flange 51 rearward.

An ejector bush, an ejector pin, a movable-side air blow bush, and other unillustrated members are also disposed in the mold assembly 32.

In the thus-configured disc-molding mold, when the movable platen is advanced through operation of the mold clamping mechanism to thereby advance (move rightward in FIG. 1) the mold assembly 32, mold closing is performed, and the guide rings 18 and 38 are joined by means of rabbets, thereby aligning the cavity ring 33 with the mirror-surface disc 16 and the stamper 29. Operation of the mold clamping mechanism is caused to further proceed so as to perform mold clamping. In the mold-clamped condition, molten resin is charged into the cavity C through the sprue 26. The charged resin is cooled and becomes a prototype substrate. In order to join the guide rings 18 and 38 by means of rabbets, an annular rabbet 18a is formed on the guide ring 18 to be located on the radially inner side thereof, and an annular rabbet 38a is formed on the guide ring 38 to be located on the radially outer side thereof. In order to cool the resin within the cavity C, a temperature control medium passage 55 is formed in the mirror-surface disc 16, and a temperature control medium passage 56 is formed in the mirror-surface disc 36.

Subsequently, the drive cylinder is operated so as to advance the flange 51, thereby advancing the cut punch 48. The front end of the cut punch 48 enters the die 28, thereby punching a hole in the prototype substrate within the cavity C. The punched prototype substrate is further cooled and becomes a disc substrate.

Next, the mold clamping mechanism is operated so as to retreat the movable platen, thereby retreating (moving leftward in FIG. 1) the mold assembly 32 for performing mold opening. Through mold opening, the disc substrate is released from the stamper 29. Subsequently, the ejector pin is advanced, thereby pushing out the disc substrate from the mold assembly 32. In this manner, the disc substrate can be taken out.

The inner holder 30 has a function of mechanically holding the inner circumferential edge of the stamper 29. In order to prevent the stamper 29 from separating from the mirror-surface disc 16 and dropping off when the disc substrate is released from the stamper 29 in the course of mold opening, an annular holding portion 58 is formed at the outer circumferential edge of the front end of the inner holder 30 in such a manner as to project frontward (leftward in FIG. 2) and radially outward.

However, in the disc-molding mold, since the annular holding portion 58 is formed at the outer circumferential edge of the front end of the inner holder 30, a groove corresponding to the holding portion 58 is formed on the disc substrate. Thus, a print region on the disc substrate is narrowed accordingly.

Since the holding portion 58 projects into the cavity C, resin charged into the cavity C passes through a portion of the cavity C that is narrowed by the holding portion 58, thus impairing fluidity of the resin. This causes, for example, formation of flow lines on the surface of the disc substrate or warpage of the disc substrate, thereby impairing quality of the disc substrate.

In order to cope with manufacturing tolerance for the stamper 29 and the inner holder 30 and to facilitate attachment of the stamper 29 and the inner holder 30, a clearance CL1 is formed between the front end surface of the mirror-surface disc 16 and the rear end surface (right end surface in FIG. 2) of the holding portion 58, and a clearance CL2 is formed between the inner circumferential surface of the stamper 29 and the outer circumferential surface of the inner holder 30. If the clearance CL1 is large, resin may enter the clearance CL1, resulting in generation of burrs on the disc substrate.

If the clearance CL2 is large, the stamper 29 may radially go off center. This causes a failure to establish concentricity between an information region and the disc substrate, thereby impairing quality of the disc substrate.

An object of the present invention is to solve the above-mentioned problems in the conventional disc-molding mold and to provide a mold for molding, a molding method, and a molding machine in which generation of burrs on a disc substrate can be prevented to thereby enhance quality of the disc substrate, as well as a disc substrate molded by the same.

### DISCLOSURE OF THE INVENTION

To achieve the above object, a mold for molding of the present invention comprises a mirror-surface disc; a stamper having a hole formed at its center, and attached to the front end surface of the mirror-surface disc; and an inner holder for holding the stamper by means of press fit into the hole.

In the course of the press fit, at least either the stamper or the inner holder is subjected to stress in excess of its yield point and plastically deformed.

In this case, the inner holder is press-fitted into the hole of the stamper to thereby hold the stamper, thereby eliminating need to form a holding portion at the outer circumferential edge of the front end of the inner holder. Accordingly, an associated groove is not formed on the disc substrate. Thus, a print region on the disc substrate can be increased in area.

Since the holding portion is not formed, the cavity is not narrowed. Accordingly, a molding material charged into the cavity exhibits good fluidity, thereby preventing formation of flow lines on the surface of the disc substrate or warpage of the disc substrate. As a result, quality of the disc substrate can be enhanced.

Since no clearance is formed between the stamper and the inner holder, generation of burrs on the disc substrate can be prevented. Since the stamper does not radially go off center, the information region and the disc substrate become concentric, thereby enhancing quality of the disc substrate.

### BRIEF DESCRIPTION OF THE DRAWINGS

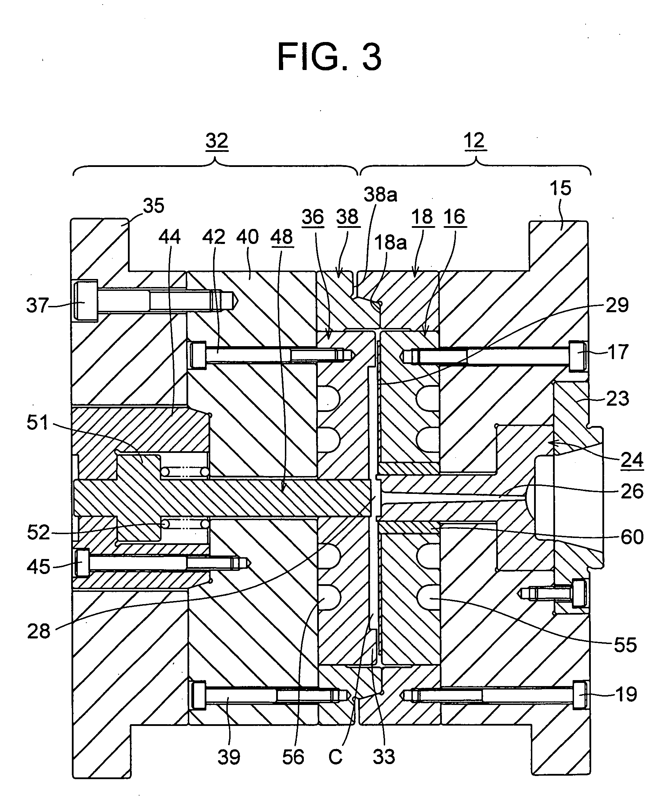

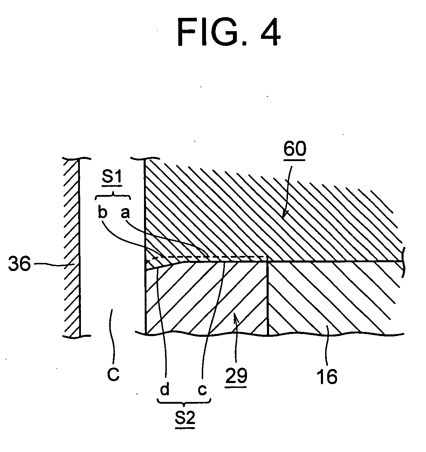

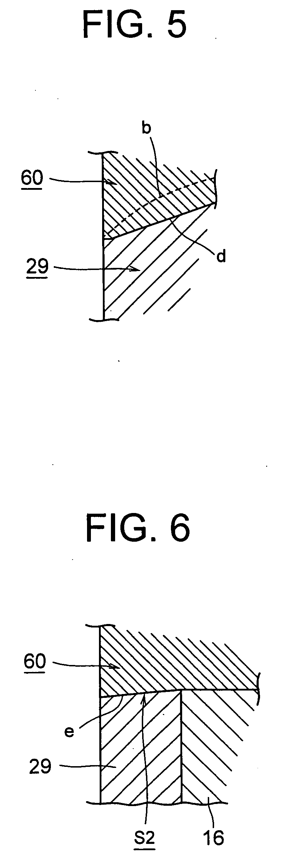

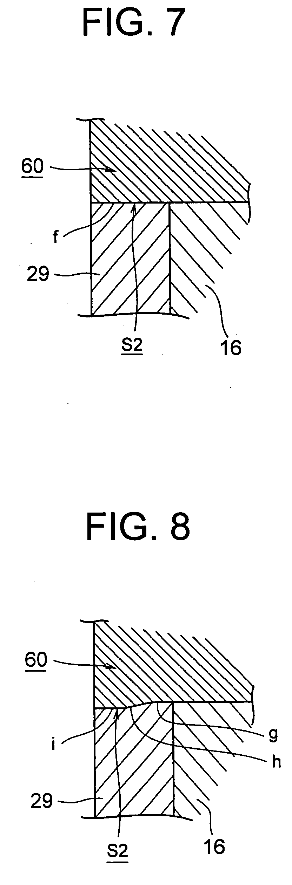

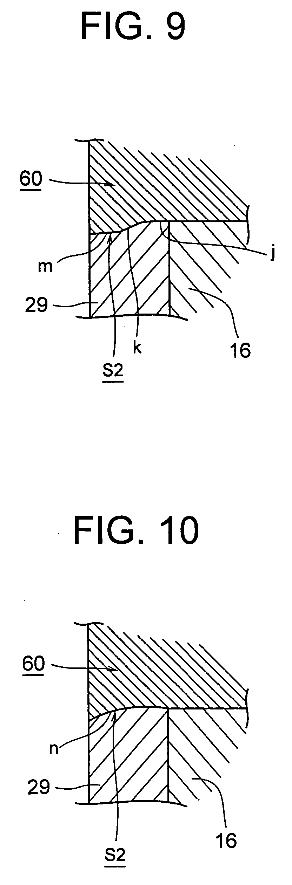

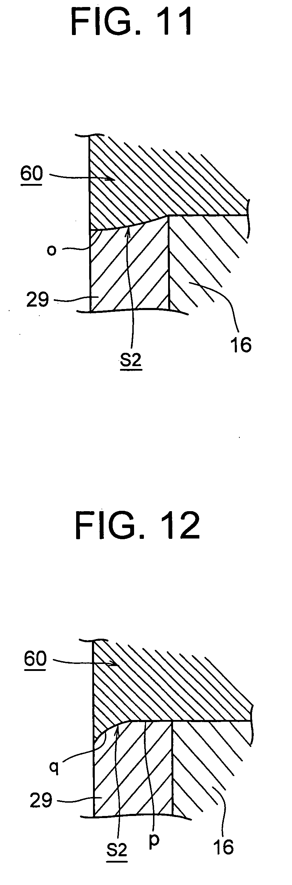

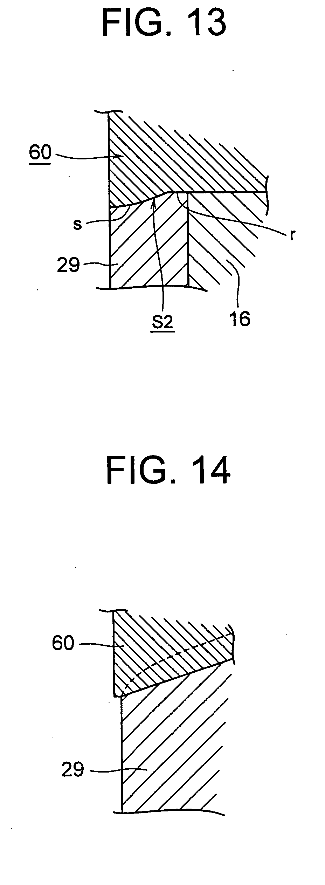

FIG. 1 is a sectional view of a conventional disc-molding mold; FIG. 2 is a sectional view showing essential portions of the conventional disc-molding mold; FIG. 3 is a sectional view of a disc-molding mold according to a first embodiment of the present invention; FIG. 4 is a sectional view showing essential portions of the disc-molding mold according to the first embodiment of the present invention; FIG. 5 is an enlarged view of a press-fit deformation region in the first embodiment of the present invention; FIG. 6 is an enlarged view showing another, first example of the press-fit deformation region in the first embodiment of the present invention; FIG. 7 is an enlarged view showing another, second example of the press-fit deformation region in the first embodiment of the present invention; FIG. 8 is an enlarged view showing another, third example of the press-fit deformation region in the first embodiment of the present invention; FIG. 9 is an enlarged view showing another, fourth example of the press-fit deformation region in the first embodiment of the present invention; FIG. 10 is an enlarged view showing another, fifth example of the press-fit deformation region in the first embodiment of the present invention; FIG. 11 is an enlarged view showing another, sixth example of the press-fit deformation region in the first embodiment of the present invention; FIG. 12 is an enlarged view showing another, seventh example of the press-fit deformation region in the first embodiment of the present invention; FIG. 13 is an enlarged view showing another, eighth example of the press-fit deformation region in the first embodiment of the present invention; and FIG. 14 is an enlarged view showing a press-fit deformation region in a second embodiment of the present invention.

### BEST MODE FOR CARRYING OUT THE INVENTION

The embodiments of the present invention will next be described in detail with reference to the drawings. In this case, a disc-molding mold will be described as a mold for molding (mold apparatus).

FIG. 3 is a sectional view of a disc-molding mold according to a first embodiment of the present invention; FIG. 4 is a sectional view showing essential portions of the disc-molding mold according to the first embodiment of the present invention; and FIG. 5 is an enlarged view of a press-fit deformation region in the first embodiment of the present invention.

In FIGS. 3 to 5, reference numeral 12 denotes a stationary-side mold assembly, which serves as a first mold assembly, attached to an unillustrated stationary platen by use of unillustrated bolts, and reference numeral 32 denotes a movable-side mold assembly, which serves as a second mold assembly, attached to an unillustrated movable platen by use of unillustrated bolts. The mold assemblies 12 and 32 constitute a disc-molding mold. An unillustrated mold clamping mechanism is disposed behind the movable platen. Operation of the mold clamping mechanism causes the movable platen to advance and retreat, whereby the mold assembly 32 advances and retreats (moves rightward and leftward in FIG. 3) to contact and move away from the mold assembly 12. In this manner, the disc-molding mold undergoes mold closing, mold clamping, and mold opening. When mold closing and mold clamping are performed, a cavity C is formed between the mold assembly 12 and the mold assembly 32.

The stationary platen, the movable platen, the mold clamping mechanism, and the like constitute a mold clamping apparatus. The disc-molding mold, the clamping apparatus, an unillustrated injection unit, and the like constitute an injection molding machine, which serves as a molding machine.

The mold assembly 12 includes a base plate 15; a mirror-surface disc 16 attached to the base plate 15 by use of bolts 17; an annular guide ring 18 disposed radially outward of the mirror-surface disc 16 and attached to the base plate 15 by use of bolts 19; a locating ring 23 disposed in the base plate 15 in such a manner as to face the stationary platen and adapted to position the base plate 15 with respect to the stationary platen; and a sprue bush 24 disposed adjacent to the locating ring 23 and extending frontward (leftward in FIG. 3) through the base plate 15 and the mirror-surface disc 16.

A sprue 26 is formed along the axis of the sprue bush 24 in order to allow passage of resin, which serves as a molding material, injected from the injection nozzle of the injection unit. The front end (the left end in FIG. 3) of the sprue bush 24 faces the cavity C, and a die 28 having a recess is formed at the front end of the sprue bush 24.

Meanwhile, when resin is fed into the cavity C and allowed to set therein, a prototype substrate, which is a prototype for a disc substrate that serves as a molded article, is formed. At this time, fine pits are formed on one side of the disc substrate, thereby forming an information side. In order to form the fine pits, a disc-like stamper 29, which has a hole formed therein at its center and serves as an insert, is attached to the front end surface (left end surface in FIG. 3) of the mirror-surface disc 16. A fine pattern consisting of fine pits is formed on the front end surface of the stamper 29. The stamper 29 is pressed against the mirror-surface disc 16 and held by means of an unillustrated outer holder acting on its outer circumferential edge and an inner holder 60 acting on its inner circumferential edge. An unillustrated stationary-side air blow bush and the like are also disposed on the mold assembly 12.

The mold assembly 32 includes a base plate 35; an intermediate plate 40 as a holding member attached to the base plate 35 by use of bolts 37; a mirror-surface disc 36 attached to the intermediate plate 40 by use of bolts 42; an annular guide ring 38 disposed radially outward of the mirror-surface disc 36 and attached to the intermediate plate 40 by use of bolts 39; a guide member 44 disposed in the base plate 35 in such a manner as to face the movable platen and attached to the intermediate plate 40 by use of bolts 45; and a cut punch 48 disposed partially in the guide member 44, in opposition to the sprue bush 24, and in such a manner as to be able to advance and retreat. The front end (right end in FIG. 3) of the cut punch 48 has a shape corresponding to the die 28.

An annular cavity ring 33 is disposed on the surface of the mirror-surface disc 36 that faces the mirror-surface disc 16, along the outer circumferential edge of the mirror-surface disc 36 in such a manner as to project toward the mirror-surface disc 16 by a dimension corresponding to the thickness of a disc substrate to be molded. In FIG. 3, the cavity ring 33 is depicted as being integral with the mirror-surface disc 36. However, in actuality, the cavity ring 33 is a separate element and fixed to the mirror-surface disc 36 by use of unillustrated bolts.

The cavity ring 33 defines a depression located radially inward thereof. When mold closing is performed, the depression serves as the cavity C.

A flange 51 formed integrally with the cut punch 48 is disposed within the guide member 44 such that it can advance and retract. An unillustrated drive cylinder is disposed rearward (leftward in FIG. 3) of the flange 51 and, when operated, causes the flange 51 to move frontward (rightward in FIG. 3). A cut-punch return spring 52 is disposed between the flange 51 and the intermediate plate 40 located frontward of the flange 51. The cut-punch return spring 52 urges the flange 51 rearward by a predetermined biasing force.

An ejector bush, an ejector pin, a movable-side air blow bush, and other unillustrated members are also disposed in the mold assembly 32.

In the thus-configured disc-molding mold, when the movable platen is advanced through operation of the mold clamping mechanism to thereby advance (move rightward in FIG. 3) the mold assembly 32, mold closing is performed, and the guide rings 18 and 38 are joined by means of rabbets, thereby aligning the cavity ring 33 with the mirror-surface disc 16 and the stamper 29. Operation of the mold clamping mechanism is caused to further proceed so as to perform mold clamping. In the mold-clamped condition, molten resin is charged into the cavity C through the sprue 26. The charged resin is cooled and becomes a prototype substrate. In order to join the guide rings 18 and 38 by means of rabbets, an annular rabbet 18a is formed on the guide ring 18 to be located on the radially inner side thereof, and an annular rabbet 38a is formed on the guide ring 38 to be located on the radially outer side thereof. In order to cool the resin within the cavity C, a temperature control medium passage 55 is formed in the mirror-surface disc 16, and a temperature control medium passage 56 is formed in the mirror-surface disc 36. A temperature control medium fed from an unillustrated temperature controller flows through the temperature control medium passages 55 and 56.

Subsequently, the drive cylinder is operated so as to advance the flange 51, thereby advancing the cut punch 48. The front end of the cut punch 48 enters the die 28, thereby punching a hole in the prototype substrate within the cavity C. The punched prototype substrate is further cooled and becomes a disc substrate.

Next, the mold clamping mechanism is operated so as to retreat the movable platen, thereby retreating (moving leftward in FIG. 3) the mold assembly 32 for performing mold opening. Through mold opening, the disc substrate is released from the stamper 29. Subsequently, the ejector pin is advanced, thereby pushing out the disc substrate from the mold assembly 32. In this manner, the disc substrate can be taken out.

The inner holder 60 has a function of mechanically holding the inner circumferential edge of the stamper 29. In order to prevent the stamper 29 from separating from the mirror-surface disc 16 and dropping off when the disc substrate is released from the stamper 29 in the course of mold opening, the inner holder 60 is attached to the mold assembly 12 as follows: in the course of attachment of the inner holder 60 to the mold assembly 12, the inner holder 60 is press-fitted into the hole of the stamper 29, thereby pressing the stamper 29 against the mirror-surface disc 16 and thus holding the stamper 29 in place.

In this case, a press-fit deformation region is established at at least a portion of the outer circumferential surface of a front end portion (left end portion in FIG. 3) of the inner holder 60 and at a corresponding portion of the inner circumferential surface of the stamper 29; in the present embodiment, over the entire outer circumferential surface of the front end portion of the inner holder 60 and over the entire inner circumferential surface of the stamper 29. Press fit is performed in the press-fit deformation region. In the course of press fit, at least either the inner holder 60 or the stamper 29; in the present embodiment, the stamper 29, is subjected to stress in excess of a yield point of a material used to form the stamper 29. As a result, the stamper 29 is plastically deformed.

For such plastic deformation, the stamper 29 is formed from a first material suited for plastic deformation; for example, pure nickel, whereas the inner holder 60 is formed from a second material having higher hardness than pure nickel; for example, stainless steel.

The press-fit deformation region may be established at each of at least two positions in the circumferential direction of the stamper 29 and the inner holder 60 and at at least one position in the axial direction of the stamper 29 and the inner holder 60.

In order to plastically deform the stamper 29, as measured in the press-fit deformation regions, the outside diameter of the inner holder 60 is rendered greater than the inside diameter of the stamper 29. Also, as measured in the press-fit deformation regions, the diameter of the front end of the inner holder 60 is rendered greater than the diameter of the rear end (right end in FIG. 3) of the inner holder 60. For example, in FIG. 4, at the boundary between the inner holder 60 and the stamper 29, reference symbol S1 denotes the inner circumferential surface of the stamper 29 before press fit is performed. The inner circumferential surface S1 consists of a cylindrical surface a and a curved surface b. The cylindrical surface a extends frontward (leftward in FIG. 4) from the rear end (right end in FIG. 4) of the stamper 29. The curved surface b is curved frontward from the front end (left end in FIG. 4) of the surface a such that its diameter increases gradually. Reference symbol S2 denotes the outer circumferential surface of the inner holder 60 in the press-fit deformation region. The outer circumferential surface S2 consists of a plurality of surfaces axially adjacent to each other. In the present embodiment, the outer circumferential surface S2 assumes the same profile before and after press fit is performed, and consists of a cylindrical surface c and a conical surface d. The cylindrical surface c extends frontward from the rear end of the stamper 29. The conical surface d extends frontward from the front end of the surface c in an oblique manner such that its diameter increases gradually.

The surface c is rendered slightly greater in diameter than the surface a. The diameter of the conical surface d is rendered greater than that of the curved surface b by an amount (for example, 30 µm as measured at a maximum-diameter portion) sufficient for press fit. Accordingly, in the course of press fit, the inner circumferential surface S1 is plastically deformed in the radially outward direction, thereby assuming a profile along the outer circumferential surface S2. As a result, the inner circumferential surface S1 and the outer circumferential surface S2 are brought into tight contact, whereby the inner holder 60 holds the stamper 29 in a sufficiently reliable manner and presses the stamper 29 against the mirror-surface disc 16.

In order to cause the inner holder 60 to retreat (move rightward in FIG. 3), an unillustrated engaging mechanism is disposed within the base plate 15. The engaging mechanism includes an operation rod, which rotatably extends from the outside of the disc-molding mold to the vicinity of the outer circumferential surface of the inner holder 60, and an engaging portion, which is formed at an end of the operation rod and has a predetermined semicircular shape. By means of rotating the operation rod, the engaging portion is engaged with a predetermined portion of the rear end of the inner holder 60, thereby causing the inner holder 60 to retreat. The predetermined portion of the rear end of the inner holder 60 assumes, for engagement, a predetermined shape corresponding to the engaging portion of the operation rod.

In this case, the distance of retreat of the inner holder 60 is determined such that, after press fit is performed, the front end surface of the inner holder 60 and the front end surface of the stamper 29 are present on the same plane. In order to stop the inner holder 60 when the front end surface of the inner holder 60 and the front end surface of the stamper 29 coincide with each other on the same plane, an unillustrated stopper, which serves as a stop member, can be disposed at a predetermined position located rearward (rightward in FIG. 3) of the inner holder 60.

While the stamper 29 is pressed against the mirror-surface disc 16, the inner holder 60 is inserted into the respective holes formed in the stamper 29 and the mirror-surface disc 16, and the rear end of the inner holder 60 is engaged with the engaging portion of the operation rod. When the engaging mechanism is operated, the inner holder 60 is retreated; accordingly, the front end of the inner holder 60 is fitted into the hole of the stamper 29, whereby the inner holder 60 is press-fitted into the hole of the stamper 29.

Since the stamper 29 is held by the inner holder 60 by means of the above-mentioned press fit, there arises no need to form a holding portion at the outer circumferential edge of the front end of the inner holder 60. Accordingly, an associated groove is not formed on the disc substrate. Thus, a print region on the disc substrate can be expanded. In other words, a flat, wide region ranging from the inner circumferential edge to the outer circumferential edge of the disc substrate can serve as a print region.

Since the holding portion is not formed, the cavity C is not narrowed. Accordingly, a molding material charged into the cavity C exhibits good fluidity, thereby preventing formation of flow lines on the surface of the disc substrate or warpage of the disc substrate. As a result, quality of the disc substrate can be enhanced.

Since no clearance is formed between the stamper 29 and the inner holder 60, generation of burrs on the disc substrate can be prevented. Since the stamper 29 does not radially go off center, the information region and the disc substrate are concentric, thereby enhancing quality of the disc substrate.

In the inner holder 60, since the diameter of the conical surface d increases frontward, even when an external force is imposed on the stamper 29, the stamper 29 does not come off from the front end of the inner holder 60. Accordingly, the stamper 29 can be reliably held. In this case, a portion of the inner holder 60 where the conical surface d is formed serves as a detachment preventive portion for preventing the stamper 29 from coming off from the inner holder 60.

In the present embodiment, in the course of press fit, the stamper 29 is plastically deformed. The plastic deformation arises when stress that is generated in the stamper 29 by an externally imposed force exceeds a yield point, which is the limit of elastic deformation of the stamper 29.

In the above-mentioned elastic deformation, when an external force is imposed, strain corresponding to the force is generated, and stress is internally generated. When the external force is removed, the original shape is restored; strain becomes zero (0); and internal stress becomes zero. Accordingly, stress that is generated in a stamper as a result of an inner holder being press-fitted into the stamper remains unchanged.

By contrast, in the above-mentioned plastic deformation, when an external force is imposed, strain corresponding to the force is generated. While the amount of strain is changing, internal stress is generated. However, when the amount of strain stops changing, internal stress becomes zero. Even when the external force is removed, the original shape is not restored, and the strain does not become zero. The internal stress remains zero. Accordingly, stress that is generated in the stamper 29 as a result of the inner holder 60 being press-fitted into the stamper 29 becomes zero; i.e., does not remain.

As described above, in the present embodiment, once the inner holder 60 is attached to thereby be press-fitted into the stamper 29, stress does not remain in the stamper 29, whereby the mounted condition of the stamper 29 can be stabilized. As a result, quality of the disc substrate can be enhanced.

In the case where the stamper is elastically deformed, the stamper fails to be firmly supported by the inner holder; as a result, the stamper may radially go off center. By contrast, in the present embodiment, the stamper 29 is plastically deformed and firmly supported by the inner holder 60, so that the stamper 29 does not radially go off center. Accordingly, the information region and the disc substrate become concentric, thereby enhancing quality of the disc substrate.

In formation of the stamper 29, a hole is punched in a disc of pure nickel by use of a press. In this case, even when the hole is punched at low accuracy, the positioning accuracy for the stamper 29 can be improved as follows. When the stamper 29 is to be attached to the mirror-surface disc 16, the information region is aligned with the mirror-surface disc 16 for positioning of the stamper 29 with respect to the mirror-surface disc 16. In the aligned condition, the inner holder 60 is press-fitted, thereby improving the positioning accuracy for the stamper 29. Accordingly, the stamper 29 does not radially go off center.

In the present embodiment, in press fit of the inner holder 60 into the stamper 29, only the stamper 29 is plastically deformed. However, the inner holder 60 may be plastically deformed during press fit into the stamper 29 without plastic deformation of the stamper 29. In this case, the inner holder 60 is configured such that its surface portion that contacts the stamper 29 and is plastically deformed is removably disposed on its base portion. Accordingly, when the stamper 29 cannot be smoothly press-fitted to the inner holder 60, smooth press fit can be achieved by replacing only the inexpensive surface portion of the inner holder 60, without need to replace the expensive stamper 29. Furthermore, both the stamper 29 and the inner holder 60 may be plastically deformed for press fit.

Next, other examples of a press-fit deformation region will be described.

FIG. 6 is an enlarged view showing another, first example of the press-fit deformation region in the first embodiment of the present invention; FIG. 7 is an enlarged view showing another, second example of the press-fit deformation region in the first embodiment of the present invention; FIG. 8 is an enlarged view showing another, third example of the press-fit deformation region in the first embodiment of the present invention; FIG. 9 is an enlarged view showing another, fourth example of the press-fit deformation region in the first embodiment of the present invention; FIG. 10 is an enlarged view showing another, fifth example of the press-fit deformation region in the first embodiment of the present invention; FIG. 11 is an enlarged view showing another, sixth example of the press-fit deformation region in the first embodiment of the present invention; FIG. 12 is an enlarged view showing another, seventh example of the press-fit deformation region in the first embodiment of the present invention; and FIG. 13 is an enlarged view showing another, eighth example of the press-fit deformation region in the first embodiment of the present invention.

In FIGS. 6 to 13, reference numeral 16 denotes the mirror-surface disc; reference numeral 29 denotes the stamper; reference numeral 60 denotes the inner holder; and reference symbol S2 denotes the outer circumferential surface of the inner holder 60 in the press-fit deformation region.

In the first example, as shown in FIG. 6, the outer circumferential surface S2 is a conical surface e, which extends frontward (leftward in FIG. 6) from the rear end (right end in FIG. 6) of the stamper 29 in an oblique manner such that its diameter increases gradually. In the second example, as shown in FIG. 7, the outer circumferential surface S2 is a cylindrical surface f, which extends frontward from the rear end of the stamper 29. In the third example, as shown in FIG. 8, the outer circumferential surface S2 consists of a cylindrical surface g, which extends frontward from the rear end of the stamper 29; a conical surface h, which extends frontward from the front end (left end in FIG. 8) of the surface g in an oblique manner such that its diameter increases gradually; and a cylindrical surface i, which extends frontward from the front end of the conical surface h. In the fourth example, as shown in FIG. 9, the outer circumferential surface S2 consists of a cylindrical surface j, which extends frontward from the rear end of the stamper 29; a conical surface k, which extends frontward from the front end of the surface j in an oblique manner with a first angle θ1 such that its diameter increases gradually; and a conical surface m, which extends frontward from the front end of the conical surface k in an oblique manner with a second angle θ2 (< θ1) such that its diameter increases gradually.

In the fifth example, as shown in FIG. 10, the outer circumferential surface S2 is a curved surface n, which is curved frontward from the rear end of the stamper 29 such that its diameter increases gradually while its angle increases gradually. In the sixth example, as shown in FIG. 11, the outer circumferential surface S2 is a curved surface o, which is curved frontward from the rear end of the stamper 29 such that its diameter increases gradually while its angle decreases gradually. In the seventh example, as shown in FIG. 12, the outer circumferential surface S2 consists of a cylindrical surface p, which extends frontward from the rear end of the stamper 29, and a curved surface q, which is curved frontward such that its diameter increases gradually while its angle increases gradually. In the eighth example, as shown in FIG. 13, the outer circumferential surface S2 consists of a cylindrical surface r, which extends frontward from the rear end of the stamper 29, and a curved surface s, which is curved frontward such that its diameter increases gradually while its angle decreases gradually.

In the first example, the conical surface e serves as a detachment preventive portion; in the third example, the conical surface h and the surface i cooperatively serve as a detachment preventive portion; in the fourth example, the conical surfaces k and m cooperatively serve as a detachment preventive portion; in the fifth example, the curved surface n serves as a detachment preventive portion; in the sixth example, the curved surface o serves as a detachment preventive portion; in the seventh example, the curved surface q serves as a detachment preventive portion; and in the eighth example, the curved surface s serves as a detachment preventive portion.

Next, a second embodiment of the present invention will be described.

FIG. 14 is an enlarged view showing a press-fit deformation region in a second embodiment of the present invention.

In FIG. 14, reference numeral 29 denotes the stamper, and reference numeral 60 denotes the inner holder. In this case, the inner holder 60 is formed in such a manner that its front end surface (left end surface in FIG. 14) projects from the front end surface of the stamper 29 to such a slight extent as not to narrow the cavity C (FIG. 3).

The above embodiments are described while mentioning a disc-molding mold. However, the present invention can be applied to a mold for molding, for example, a light guide disc having a fine pattern formed thereon.

According to the above embodiments, the stamper 29 is disposed in the stationary-side mold assembly 12. However, the stamper 29 may be disposed in at least either the stationary-side mold assembly 12 or the movable-side mold assembly 32.

The present invention is not limited to the above-described embodiments. Numeral modifications and variations of the present invention are possible in light of the spirit of the present invention, and they are not excluded from the scope of the present invention.

### INDUSTRIAL APPLICABILITY

The present invention can be applied to a molding machine for molding disc substrates.

## Claims

1. A mold for molding, **characterized by** comprising:
(a) a mirror-surface disc;
(b) a stamper having a hole formed at its center, and attached to a front end surface of said mirror-surface disc; and
(c) an inner holder for holding said stamper by means of press fit into said hole, wherein
(d) in the course of said press fit, at least either said stamper or said inner holder is subjected to stress in excess of its yield point and plastically deformed.

2. A mold for molding according to claim 1, wherein said press fit is performed by means of plastically deforming said stamper.

3. A mold for molding according to claim 1, wherein after said press fit is performed, a front end surface of said inner holder and a front end surface of said stamper are brought onto the same plane.

4. A mold for molding according to claim 3, further comprising a stopper member for stopping said inner holder at such a position that the front end surface of said inner holder and the front end surface of said stamper are brought onto the same plane.

5. A mold for molding according to claim 1, wherein said press fit is performed in a press-fit deformation region established at each of at least two positions in a circumferential direction of said stamper and said inner holder.

6. A mold for molding according to claim 5, wherein in said press-fit deformation regions, an outer circumferential surface of said inner holder comprises a plurality of surfaces.

7. A mold for molding according to claim 5, wherein as measured in said press-fit deformation regions, a diameter of a front end of said inner holder is greater than a diameter of a rear end of said inner holder.

8. A mold for molding according to claim 7, wherein in said press-fit deformation regions, a detachment preventive portion is formed for preventing detachment of said stamper from said inner holder.

9. A mold for molding according to claim 1, wherein the front end surface of said inner holder projects from the front end surface of said stamper.

10. A mold for molding, **characterized by** comprising:
(a) a first mold assembly;
(b) a second mold assembly disposed in such a manner as to be able to advance toward and retreat from said first mold assembly;
(c) an insert disposed in at least either said first or second mold assembly; and
(d) an inner holder for disposing said insert, wherein
(e) in the course of press fit, at least either said insert or said inner holder is subjected to stress in excess of its yield point and plastically deformed.

11. A molding machine comprising a mold for molding according to any one of claims 1 to 10.

12. A molding method for molding an article by means of a mold for molding comprising a first mold assembly, a second mold assembly, and a stamper provided in at least either said first or second mold assembly and having a fine pattern formed thereon, said molding method being **characterized by** comprising:
(a) disposing said stamper and an inner holder in at least either said first or second mold assembly such that in the course of press fit, at least either said stamper or said inner holder is subjected to stress in excess of its yield point and plastically deformed;
(b) advancing said second mold assembly toward said first mold assembly so as to form a cavity;
(c) charging a molding material into said cavity;
(d) transferring said fine pattern formed on said stamper onto said molding material;
(e) cooling said molding material within said cavity; and
(f) retreating said second mold assembly so as to releasing a molded article.

13. A disc substrate molded by means of charging a molding material into a cavity of a mold for molding according to any one of claims 1 to 10.

14. A disc substrate according to claim 13, wherein a wide, depression-free region ranging from its inner circumferential edge to its outer circumferential edge serves as a print region.
